# EUROPEAN PATENT APPLICATION

(11) **EP 4 800 451 A1**
(43) Date of publication of application: **02.09.2026**
(21) Application number: 26161090.1
(22) Date of filing: 26.02.2026
(51) Int. Cl.: G02B 6/38

(54) **MULTI-SECTION TERMINATION HYBRID FIBER AND ELECTRICAL CONNECTOR ASSEMBLY**

(30) Priority: 28.02.2025 US 202563764611 P; 30.01.2026 US 202619465292
(71) Applicant: Panduit Corp., Tinley Park, Illinois 60487 (US)
(72) Inventor: Bolouri-Saransar, Masud, Tinley Park (US); Huang, Yu, Tinley Park (US); Sedor, Thomas M., Tinley Park (US); Castro, Jose M., Tinley Park (US); Patel, Satish I., Tinley Park (US); Murphy, Ryan N., Tinley Park (US); Kose, Bulent, Tinley Park (US); Dundek, Frank J., New Lenox (US)
(74) Representative: Roberts, Gwilym Vaughan

(57) **Abstract**

A multi-section termination hybrid connector assembly is provided. The multi-section termination hybrid connector includes a multi-section termination design for improving strength and stability for the connection point of where a hybrid cable is being terminated with the hybrid connector.

## Description

### CROSS-REFERENCE TO RELATED APPLICATION(S)

This application claims benefit to U.S. Provisional Patent Application No. 63/764,611, filed on February 28, 2025, the entirety of which is hereby incorporated by reference herein.

### TECHNICAL FIELD

The application relates to a hybrid fiber and electrical connector assembly that includes a multi-section termination design for improving strength and stability for the connection point of where a hybrid cable is being terminated with the hybrid connector.

### BACKGROUND

Hybrid connectors that combine optical fiber and electrical connectors have become increasingly prevalent in various industries where data transmission and power delivery are required within the same infrastructure. Although different designs exist, typically, hybrid connectors are comprised of both fiber and electrical connectors encased within a bulky and costly outer housing. These hybrid connectors are connected to hybrid cables that similarly include both optical fibers and electrical conductor wires. The fiber connector in the hybrid connector receives an optical signal from the optical fiber in the hybrid cable, and the electrical connector in the hybrid connector receives an electrical signal from the conductor wire in the hybrid cable.

Conventional methods for terminating such hybrid connectors typically entail separate procedures and housings for the fiber and electrical components. Common fiber termination techniques include fusion splicing and mechanical splicing. While fusion splicing yields superior fiber connection quality, it necessitates relatively bulky and expensive fusion splicing equipment and consumes more processing time than mechanical splicing. Consequently, fiber installers may often resort to mechanical splicing due to its cost-effectiveness and convenience.

The separate terminating processes and housings for the fiber and electrical components often result in complex and bulky connector designs. Some hybrid connectors have been designed to integrate fiber alignment features with electrical contacts within a singular connector assembly to streamline termination procedures and augment overall performance. Nevertheless, such a solution exhibits a notable drawback: integration of termination within the connector housing. As a result, the gravitational force exerted by the rigid and heavy hybrid fiber and electrical conductor wires (e.g., the conductor wires are heavier than the optical fibers, especially for larger diameter conductor wires) imposes substantial torque on the fiber connector, leading to compromised connection quality at the termination point where the optical fiber from the hybrid cable is terminated in the fiber connector. Although remediating measures such as downsizing the diameter of the electrical conductor wire are possible, this would constrain the maximum electrical power transfer achievable in the hybrid connector.

### SUMMARY

Disclosed herein are embodiments for a multi-section termination hybrid connector assembly that utilize a termination box to alleviate stress on the termination point for where a hybrid cable is terminated onto the hybrid connector of the multi-section termination hybrid connector assembly.

According to some embodiments, a hybrid connector assembly is provided that includes a termination device, a flexible transition, and a hybrid connector, where the flexible transition is made from a pliable material and houses at least one fiber pigtail and one electrical conductor wire that are terminated at the hybrid connector at one end and the termination device at the opposite end.

According to some embodiments, a hybrid connector assembly is provided that includes a hybrid connector, a termination box, and a flexible transition including an optical fiber and an electrical conductor, wherein a first end of the optical fiber is terminated at the hybrid connector and a first end of the electrical conductor is terminated at the hybrid connector.

A detailed description of these and other non-limiting exemplary embodiments of the multi-section termination hybrid connector assembly is set forth below together with accompanying drawings.

### BRIEF DESCRIPTION OF THE DRAWINGS

FIG. 1A is a perspective view of a multi-section termination hybrid connector assembly, according to some embodiments of the present disclosure.
FIG. 1B is a perspective view of a hybrid connector that may be included in the multi-section termination hybrid connector assembly shown in FIG. 1A, according to some embodiments of the present disclosure.
FIG. 2 is a perspective view of the multi-section termination hybrid connector assembly shown in FIG. 1, where a hybrid cable is shown being terminated within a termination box of the multi-section termination hybrid connector assembly, according to some embodiments of the present disclosure.
FIG. 3 is a perspective view of an exemplary fiber termination feature included in the termination box of the multi-section termination hybrid connector assembly, according to some embodiments of the present disclosure.
FIG. 4 shows exemplary electrical conductor wire embodiments that may be utilized within a flexible transition of the multi-section termination hybrid connector assembly, according to some embodiments of the present disclosure.
FIG. 5 is a perspective view of the multi-section termination hybrid connector assembly where the flexible transition is shown in a bent use state, according to some embodiments of the present disclosure.
FIG. 6 is a perspective view of a multi-section termination hybrid connector assembly according to a first alternative embodiment, where the fiber pigtails within the flexible transition are intentionally sagged, according to the first alternative embodiment of the present disclosure.
FIG. 7 is a perspective view of a multi-section termination hybrid connector assembly according to a second alternative embodiment, where the optical fibers from the hybrid cable are directly field terminated into the fiber connectors of the hybrid connector while the conductor wires from the hybrid cable are terminated within a termination box, according to the second alternative embodiment of the present disclosure.
FIG. 8 is a perspective view of a multi-section termination hybrid connector assembly including rigid plates, according to a third alternative embodiment of the present disclosure.
FIG. 9 is a perspective view of the multi-section termination hybrid connector assembly shown in FIG. 8, where the rigid plates are now shown attached to a hybrid adapter, according to some embodiments of the present disclosure.
FIG. 10A is a side view showing a multi-section termination hybrid connector assembly including an angled rigid plate, according to a fourth alternative embodiment of the present disclosure.
FIG. 10B is a side view showing a multi-section termination hybrid connector assembly including a rotatable rigid plate, according to a fifth alternative embodiment of the present disclosure.

### DETAILED DESCRIPTION

As required, detailed non-limiting embodiments of the multi-section termination hybrid connector assembly are disclosed herein. However, it is to be understood that the disclosed embodiments are merely exemplary and may take various and alternative forms. The figures are not necessarily to scale, and features may be exaggerated or minimized to show details of particular components. Therefore, specific structural and functional details disclosed herein are not to be interpreted as limiting, but merely as a representative basis for teaching one skilled in the art.

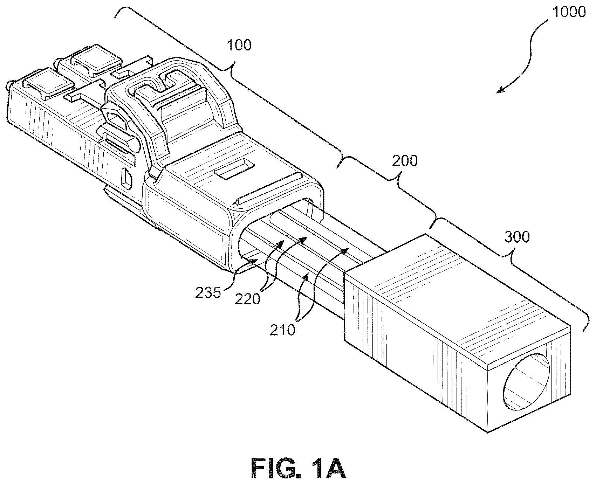

FIG. 1A shows a perspective view of a multi-section termination hybrid connector assembly 1000 (hereinafter may be referred to as the "hybrid connector assembly") according to an embodiment of this disclosure. The hybrid connector assembly 1000 comprises three main sections: a duplex hybrid connector 100, a flexible transition 200, and a termination box 300 for terminating a fiber and copper wires.

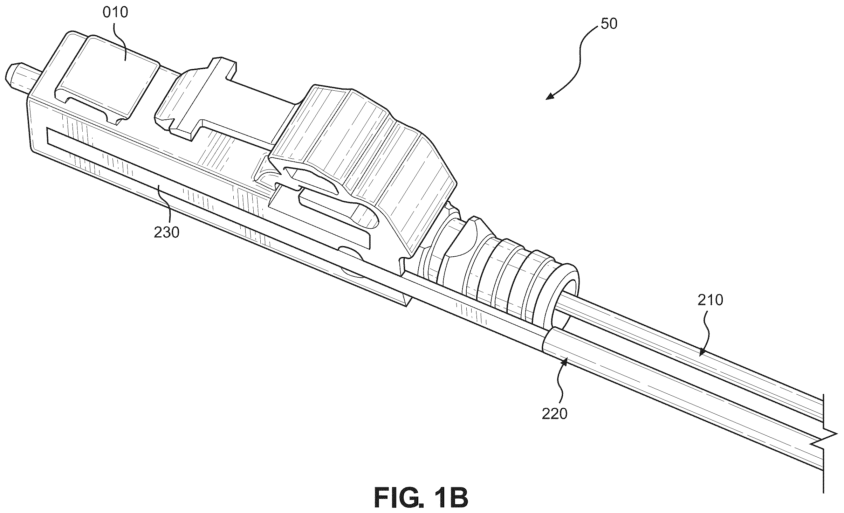

The duplex hybrid connector 100 includes a duplex hybrid connector housing that includes two individual hybrid connectors 50, as shown in FIG. 1B. Each hybrid connector 50 includes a fiber optic connector 10 and a conductive plate 230. The two conductive plates 230 (e.g., one conductive plate 230 provided on a side wall for each of the hybrid connectors 50 that comprise the duplex hybrid connector 100) are positioned in the center of the duplex hybrid connector 100, thus ensuring they cannot be touched by the operator's fingers for safety reasons.

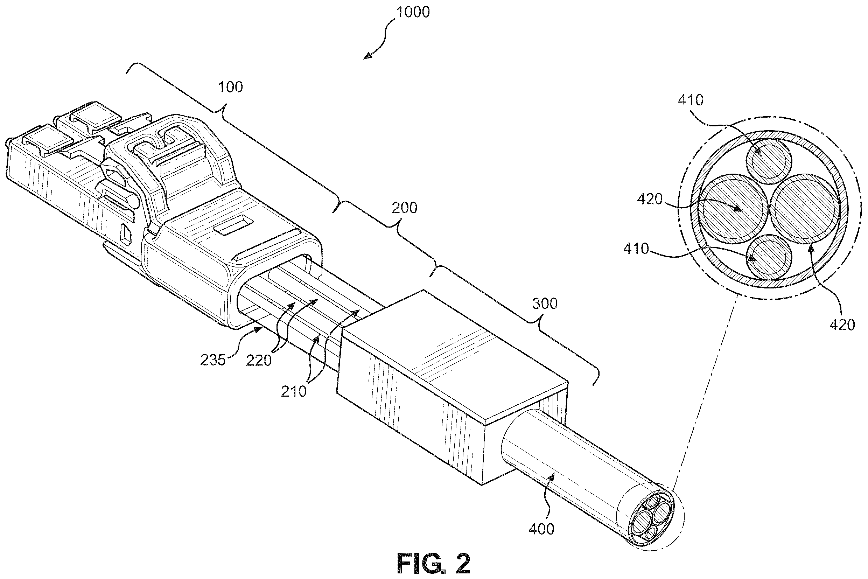

The flexible transition 200 comprises two fiber pigtails 210, two electrical conductor wires 220, and a flexible transition 235. The flexible transition 235 provides protection and connects the termination box 300 to the duplex hybrid connector 100, and helps facilitate a seamless transition by encasing both the fiber pigtails 210 and the electrical conductor wires 220 and carrying them between the termination box 300 and the duplex hybrid. The termination box 300 interfaces with the fiber pigtails 210 and electrical conductor wires 220 on one side and can be connected to a hybrid fiber and electrical cable 400 (hereinafter the "hybrid cable 400") on the opposite side, as shown in FIG. 2.

As also shown in FIG. 2, the hybrid cable 400 also includes fiber pigtails 410 and electrical conductor wires 420. The termination box 300 serves as an interface point for integrating hybrid fiber and electrical connections effectively between the hybrid cable 400 and the hybrid connector assembly 1000. For example, the electrical conductor wires 220 connected to the duplex hybrid connector 100 may be electrically coupled to the electrical conductor wires 420 from the hybrid cable 400 inside the termination box 300 via insulation piercing blades, crimping, or other electrical conductor coupling methods. Furthermore, the fiber pigtails 210 connected to the duplex hybrid connector 100 may be optically coupled to the fiber pigtails 410 from the hybrid cable 400 inside the termination box 300 via splicing methods.

For example, when considering fiber termination options within the termination box 300, two prevalent techniques that may be implemented include fusion splicing and mechanical splicing. Fusion splicing necessitates sufficient fiber length from both ends for the fusion splicer's fiber holder and extra length for the heat protection tube, which may be difficult to implement in a field installation scenario. On the other hand, mechanical splicing of optical fibers within the termination box 300 offers two alternatives. Firstly, an installer may furnish a hybrid connector equipped with fiber pigtails and copper wires, primed for termination to the fiber pigtails 410 and electrical conductor wires 420 from the field hybrid cable 400. Subsequently, the termination section is placed inside the termination box 300. Alternatively, the installer may provide a hybrid connector already linked to the termination box 300 via the flexible transition 200, as depicted in FIG. 2. In this scenario, the electrical conductor wires 220 from the flexible transition 200 may already be terminated within the termination fixture (e.g., insulation piercing blades) within the termination box 300.

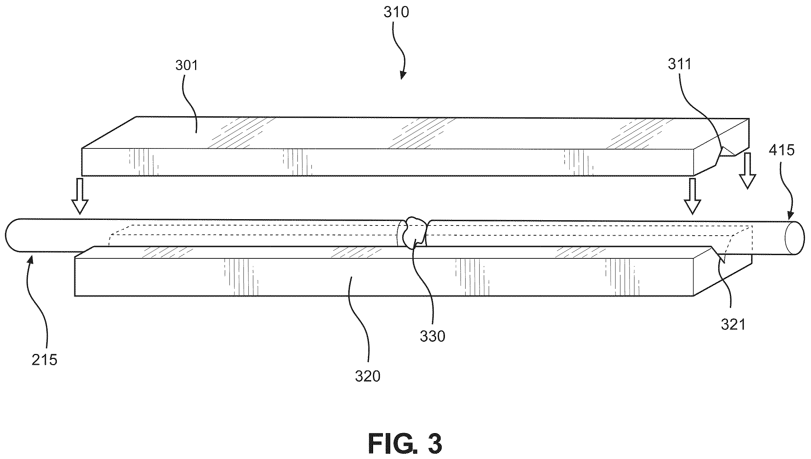

In contrast, according to the mechanical splicing technique example, the fiber pigtails 210 may be connected to a stub fiber 215 included in V-grooves 311, 321 of a splice holder 310 included inside the termination box 300 at one side, and a field fiber 415 that is connected to the fiber pigtail 410 from the hybrid cable 400 at the other side, as illustrated in FIG. 3. An amount of matching gel or epoxy 330 may be provided between the stub fiber 215 and the field fiber 415 to complete the splice between the two fibers. The splice holder 310 is shown to include a top housing 301 having a top-side V-groove, and a bottom housing 320 having a bottom-side V-groove 321.

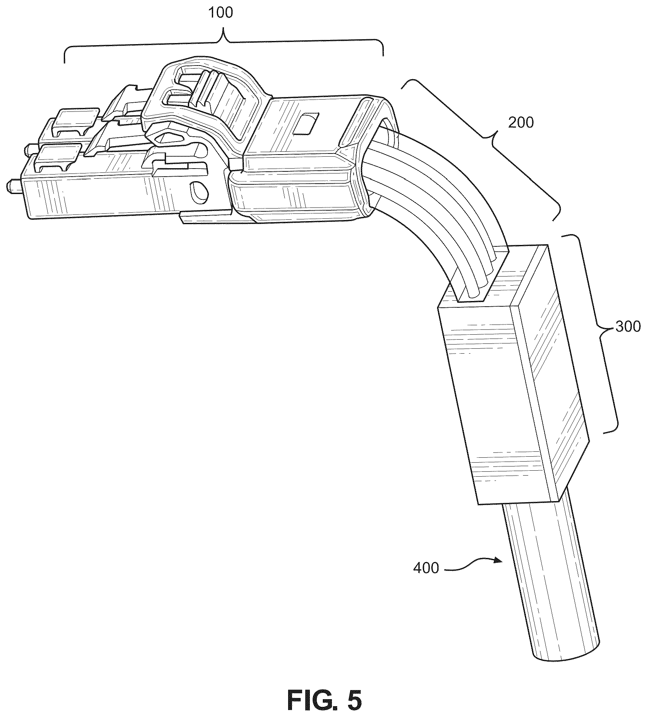

In FIG. 5, the hybrid connector assembly 1000 is shown in an exemplary use-case scenario where the duplex hybrid connector 100 may be installed, for example, into a panel or other equipment to maintain a relatively horizontal orientation, and the hybrid cable 400 that is terminated within the termination box 300 is left to weigh down the hybrid connector assembly 1000 so that the flexible transition 200 is bent downwards. This use-case scenario is caused by the weight of the hybrid cable 400 asserting a notable force downwards due to gravity, where this force is now acting on the termination box 300 and not on the terminations of the fiber optics and electrical conductor wires that are terminated within the termination box.

Furthermore, when the flexible transition 200 is bent and is being pulled by the downward force of the weight of the hybrid cable 400 as shown in FIG. 5, these forces are translated onto the flexible transition 200 and not directly onto the fiber pigtails 210 or the electrical conductor wires 220 held within the flexible transition 200. Therefore, there is a greater probability that the optical connection between the fiber pigtails 210 and the fiber optic connectors 10 and the termination box 300 remains undisturbed and thus provides the intended performance. The flexible transition 200 may be made from a pliable material such as a plastic, polyurethane, or other pliable polymer material. Si even when the flexible transition 200 is bent to approximately 90 degrees, as shown in FIG. 5, this bending action significantly reduces the torque exerted on the fiber optic connectors 10, as it minimizes the lever arm of the force on the fiber optic connectors 10, and instead translates it more on the flexible transition 200. Consequently, this design enhancement ensures the integrity and quality of the fiber connection within the hybrid connector assembly 1000 thereby optimizing performance and reliability.

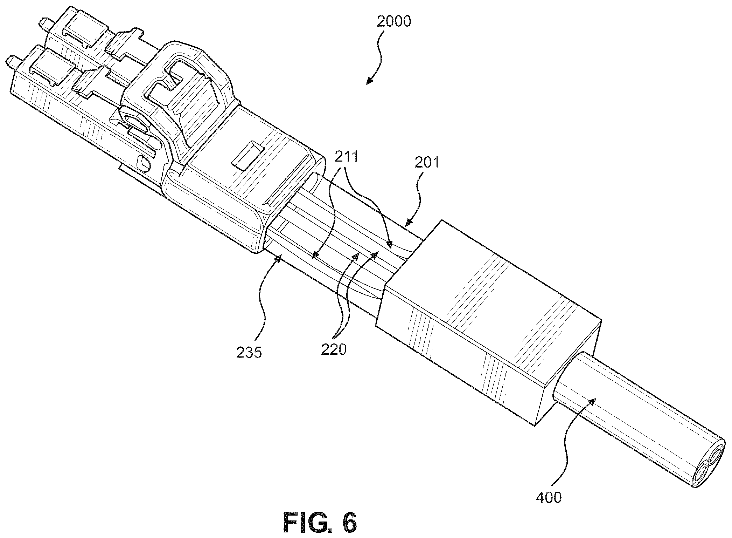

According to some embodiments as shown in FIG. 6, a hybrid connector assembly 2000 may include fiber pigtails 211 having a greater length to provide a sagging effect compared to the electrical conductor wires 220, so that when the flexible transition 235 is bent the additional slack in the fiber pigtails 211 will avoid having a pulling force exerted on them, whereas a shorter length fiber pigtail may have endured such pulling forces when the flexible transition 235 is bent. The flexible transition 235 may be made from a plastic, polyurethane, or other pliable polymer material. According to some embodiments, a fiber furcation tube encasing the fiber pigtails 210, 211 may include strands of Kevlar to more robustly secure the fiber pigtails 210, 211 to the fiber optic connectors 10 on one end, and to the termination box 300 on an opposite end within the flexible transition 200, 235. The Kevlar strands may be secured by crimping to the fiber optic connectors 10 and to the termination box 300.

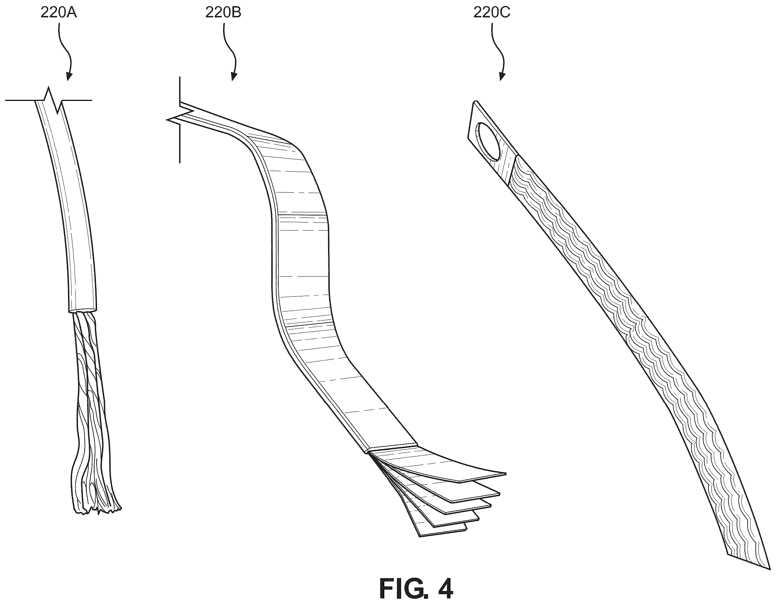

To ensure the electrical conductor wire 220 within the flexible transition remains flexible, the electrical conductor wire 220 may be stranded copper wires 220a, flexible bus bars 220b, or braided copper wire 220c, as shown in FIG. 4.

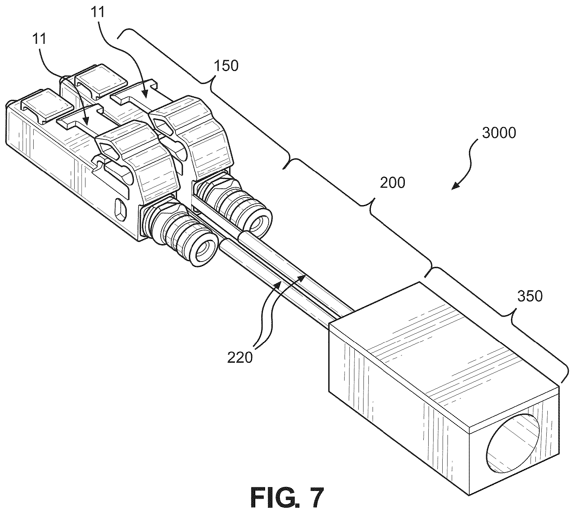

FIG. 7 shows a perspective view of a hybrid connector assembly 3000, according to an alternative embodiment. The hybrid connector assembly 3000 is similar to hybrid connector assembly 1000. However, for the hybrid connector assembly 3000 only the electrical conductor wires 220 come pre-terminated within a conductor termination box 350. The hybrid connector assembly 3000 includes a duplex hybrid connector 150 that includes field terminable fiber connectors 11, so that the optical fibers for terminating within the field terminable fiber connectors 11 are not pre-assembled as part of the hybrid connector assembly 3000, but rather are left out to be field terminated into the field terminable fiber connectors 11 during a field installation process. The field termination of the fiber pigtails that are installed into the fiber connectors 11 may be terminated within the termination box 350, so that upon completion of termination, the assembled configuration closely resembles that of the hybrid connector assembly 1000.

This approach for the hybrid connector assembly 3000 notably reduces the size and weight of the termination box 350, optimizing efficiency and practicality for certain installation situations. Moreover, this setup retains the ability to bend, ensuring adaptability and versatility in various installation scenarios.

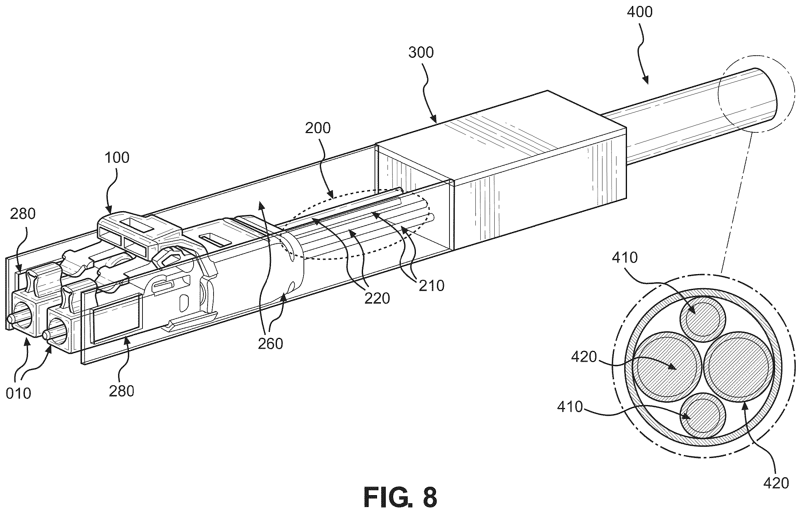

FIG. 8 shows a perspective view of a hybrid connector assembly 4000, according to an alternative embodiment. The hybrid connector assembly 4000 shares some of the same components from the hybrid connector assembly 1000 described earlier. In addition, the hybrid connector assembly 4000 further includes a pair of rigid plates 260 that extend out from the termination box 300. According to some embodiments, the rigid plates 260 may be molded as part of an extension from the housing for the termination box 300, or according to other embodiments the rigid plates may be attached to the termination box 300 via mechanical attachment or adhesion or other binding mechanism.

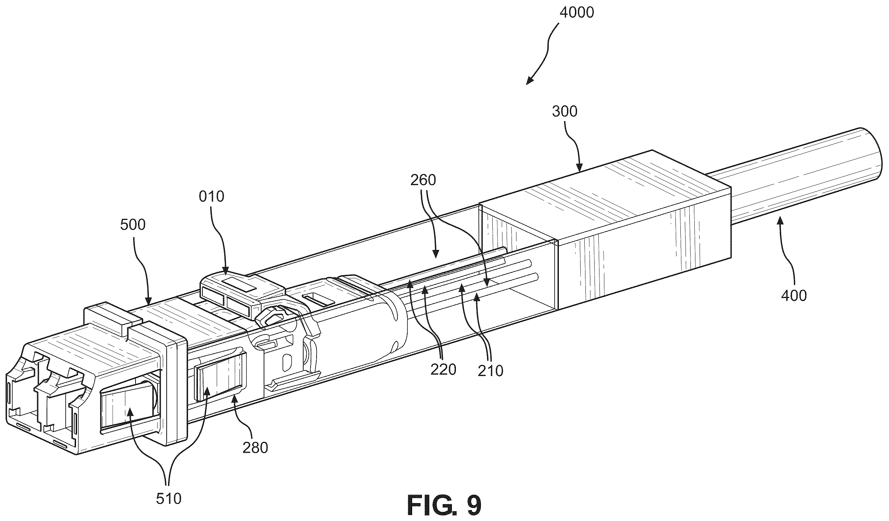

The rigid plates 260 extend out from the termination box 300 to run past the flexible transition 200, and includes a window 280 on each of the rigid plates 260 for engaging a hybrid adapter 500 to which the hybrid connector 100 is installed into. More specifically, the windows 280 are configured to be installed over the latches 510 that are on the hybrid adapter 500, as shown in FIG. 9. By providing a bridge from the termination box 300 to the hybrid adapter 500, the rigid plates 260 redistribute the weight of the termination box 300 and hybrid cable 400 by channeling it onto the hybrid adapter 500 rather than the fiber optic connectors 10, thus effectively removing any torque force on the fiber optic connectors 10. As with the other hybrid connector assemblies 1000, 2000, 3000 described herein, removing a force that may be placed on the fiber optic termination of the fiber pigtails 210 onto the fiber optic connectors 10 is also one of the goals for the hybrid connector assembly 4000.

As shown in FIGs. 8-9, the hybrid connector assembly 4000 retains its three-section structure by including the hybrid connector 100, the flexible transition 200 comprising fiber pigtails 210 and electrical conductor wire 220 (e.g., copper metal wire), and the termination box 300 which is configured to terminate the optical fibers and electrical conductor wires inside the hybrid cable 400.

In addition, the rigid plates 260 are strategically attached to the termination box 300 at one end, at the opposite end include a window 280 for securely affixing to the latches 510 of the hybrid adapter 500. The rigid plates 260 further enhances the stability and integrity of the termination at the fiber optic connectors 10 and the termination box 300, ensuring seamless and reliable connections.

As shown in FIG. 9 with the rigid plates 260 facilitating the secure attachment of the termination box 300 and the hybrid cable 400 onto the hybrid adapter 500 via the rigid plate 260, consequently, most, if not all, the torque initially applied to the fiber optic connector 10 may now exclusively be directed to the hybrid adapter 500. For whatever torque force may be applicable may be addressed by the flexible transition 200.

To ensure that force from the termination box 300 and hybrid cable 400 is not transmitted to the fiber optic connectors 10, the fiber pigtails 210 and the electrical conductor wires 220 are configured to maintain their flexibility and sag within the flexible transition 200. This inherent flexibility ensures that no force may be transferred to the fiber optic connector 10 through these cables. So, by preserving this flexibility and sagging, the integrity and reliability of the fiber optic connections within the hybrid connector assembly 4000 may be ensured to effectively isolate it from the weight of devices and external pulling forces, thereby optimizing overall performance of the hybrid connector assembly 4000.

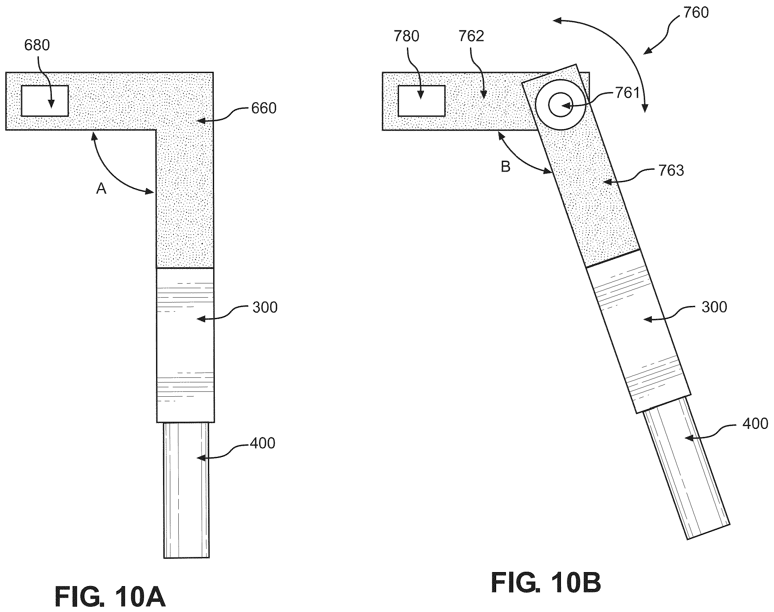

In addition to the rectangular shaped rigid plates 260 shown in FIGs. 8-9, according to an alternative embodiment a rigid plate 660 having an angled shape as shown in FIG. 10A may be used. The rigid plate 660 still is secured to the termination box 300 at one end and includes a window 780 at the opposite end to attached to a latch 510 of a hybrid adapter 500. Although the rigid plate 660 is shown to have a 90 degree fixed angle A, the fixed angle A may be at a non-zero angle ranging from greater than 0 degrees and less than 180 degrees according to other alternative embodiments that may be implemented in different installation scenarios.

According to another alternative embodiment, a rigid plate 760 may be used that includes a rotational pivot mechanism 761 for rotating a first portion 762 and a second portion 763 of the rigid plate 760 with respect to each other. The rigid plate 760 still is secured to the termination box 300 at one end and includes a window 780 at the opposite end to attached to a latch 510 of a hybrid adapter 500. By rotating about the rotational pivot mechanism 761, the first portion 762 and the second portion 763 of the rigid plate 760, an angle B between 0-360 degrees may be formed between them. The rotational pivot mechanism 761 may include, for example, a pin about which the first portion 762 and the second portion 763 rotate with reference to each other.

By incorporating such angled configurations as provided by the rigid plates 660, 760, the design of the hybrid connector assembly 4000 may further minimize the torque exerted on the hybrid adapter 500, thereby enhancing the stability of the connection. These versatile plate designs offer flexibility in tailoring the termination setup to optimize performance and reliability.

According to some alternative embodiments, the termination box 300 may be attached to various other components apart from the hybrid adapter 500. Such components may include fiber optic panels, cassettes, or enclosures. This attachment can be achieved either directly or indirectly through the utilization of supplementary accessories.

The present disclosure thus describes multi-section termination hybrid connector assembly and methods for utilizing such multi-section termination hybrid connector assembly as described above. As is readily apparent from the foregoing, various non-limiting embodiments of the systems, devices, and methods have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

Examples of the present disclosure are set out in the following numbered clauses.
1. A termination device between a hybrid connector consists of at least one fiber optic connector and a conductor, and a hybrid cable consists of at least one optical fiber and one electrical wire;
   wherein the termination device contains three sections: a connector section, a termination box section, and a flexible transition section between the connector section and the termination box section;
   wherein the flexible transition section includes at least one fiber pigtail and one electrical wire;
   wherein the fiber pigtail in the flexible transition is connected to the optical fiber connector at one side and is connected to a stub fiber in a mechanical splice device in the termination box at the other side;
   wherein the stub fiber in the termination box is ready to be terminated to the optical fiber of the hybrid cable;
   wherein the electrical wire in the flexible transition is connected to the conductor of the hybrid connector at one side and is connected to a termination fixture in the termination box;
   wherein the termination fixture in the termination box is ready to be terminated to the electrical wire of the hybrid cable;
   wherein the fiber optic connector is ready to be inserted into a hybrid adapter, which can connect the fiber optic connector to the fiber optic connector of another hybrid connector, and the hybrid adapter has a conductor that can connect the conductors of both hybrid connectors; and
   wherein a fixture is attached to the termination box on one side and ready to be affixed to the hybrid adapter on the opposite side.
2. A termination device according to clause 1, wherein the stub fiber in the termination box is ready to be terminated to the optical fiber of the hybrid cable by fusion splice.
3. A termination device according to clause 1, wherein the stub fiber in the termination box is ready to be terminated to the optical fiber of the hybrid cable by mechanical splice.
4. A termination device according to clause 1, wherein the fiber pigtail in the flexible transition section is flexible and sagged.
5. A termination device according to clause 1, wherein the electrical wire in the flexible transition section is flexible and sagged.
6. A termination device according to clause 1, wherein a flexible protector in the flexible transition encloses the fiber pigtail and electrical wires to protect them.
7. A termination device between a hybrid connector consists of at least one field terminable fiber optic connector and a conductor, and a hybrid cable consists of at least one optical fiber and one electrical wire;
   wherein the termination device consists of three sections: a connector section, a termination box section, and a flexible transition section between the connector section and the termination box section;
   wherein the field terminable fiber optic connector has a stub fiber that is ready to be terminated to the optical fiber of the hybrid cable;
   wherein the flexible transition section includes at least one electrical wire;
   wherein the electrical wire in the flexible transition is connected to the conductor of the hybrid connector on one side and to a termination fixture in the termination box on the other side;
   wherein the termination fixture in the termination box is ready to be terminated to the electrical wire of the hybrid cable;
   wherein the fiber optic connector is ready to be inserted into a hybrid adapter, which can connect the fiber optic connector to the fiber optic connector of another hybrid connector, and the hybrid adapter has a conductor that can connect the conductors of both hybrid connectors; and
   wherein a fixture is attached to the termination box on one side and ready to be affixed to the hybrid adapter on the opposite side.
8. A termination device according to clause 7, wherein the fiber pigtail in the flexible transition section is flexible and sagged.
9. A termination device according to clause 7, wherein the electrical wire in the flexible transition section is flexible and sagged.
10. A termination device according to clause 7, wherein a flexible protector in the flexible transition is added to enclose the fiber pigtail and electrical wires after termination is completed, thereby enhancing both strength and flexibility.
11. A termination device between a hybrid connector consists of at least one fiber optic connector and a conductor, and a hybrid cable consists of at least one fiber pigtail and one electrical wire;
   wherein the termination device contains three sections: a connector section, a termination box section, and a flexible transition section between the connector section and the termination box section;
   wherein the flexible transition section includes at least one fiber pigtail and one electrical wire;
   wherein the fiber pigtail in the flexible transition is connected to the optical fiber connector at one side and is connected to a stub fiber in a mechanical splice device in the termination box at the other side;
   wherein the stub fiber in the termination box is ready to be terminated to the optical fiber of the hybrid cable;
   wherein the electrical wire in the flexible transition is connected to the conductor of the hybrid connector at one side and is connected to a termination fixture in the termination box;
   wherein the termination fixture in the termination box is ready to be terminated to the electrical wire of the hybrid cable;
   wherein the fiber optic connector is ready to be inserted into a hybrid adapter, which can connect the fiber optic connector to the fiber optic connector of another hybrid connector, and the hybrid adapter has a conductor that can connect the conductors of both hybrid connectors; and
   wherein a fixture is secured to one side of the termination box while the opposite side remains open for attachment to alternative components beyond the adapter. These components may include a fiber optic panel, cassette, or enclosure.
12. A termination device according to clause 11, wherein the stub fiber in the termination box is ready to be terminated to the optical fiber of the hybrid cable by fusion splice.
13. A termination device according to clause 11, wherein the stub fiber in the termination box is ready to be terminated to the optical fiber of the hybrid cable by mechanical splice.
14. A termination device according to clause 11, wherein the fiber pigtail in the flexible transition section is flexible and sagged.
15. A termination device according to clause 11, wherein the electrical wire in the flexible transition section is flexible and sagged.
16. A termination device according to clause 11, wherein a flexible protector in the flexible transition encloses the fiber pigtail and electrical wires to protect them.
17. A termination device between a hybrid connector consists of at least one field terminable fiber optic connector and a conductor, and a hybrid cable consists of at least one fiber pigtail and one electrical wire;
   wherein the termination device consists of three sections: a connector section, a termination box section, and a flexible transition section between the connector section and the termination box section;
   wherein the field terminable fiber optic connector has a stub fiber that is ready to be terminated to the optical fiber of the hybrid cable;
   wherein the flexible transition section includes at least one electrical wire;
   wherein the electrical wire in the flexible transition is connected to the conductor of the hybrid connector at one side and is connected to a termination fixture in the termination box;
   wherein the termination fixture in the termination box is ready to be terminated to the electrical wire of the hybrid cable;
   wherein the fiber optic connector is ready to be inserted into a hybrid adapter, which can connect the fiber optic connector to the fiber optic connector of another hybrid connector, and the hybrid adapter has a conductor that can connect the conductors of both hybrid connectors; and
   wherein a fixture is secured to one side of the termination box while the opposite side remains open for attachment to alternative components beyond the adapter. These components may include a fiber optic panel, cassette, or enclosure.
18. A termination device according to clause 17, wherein the fiber pigtail in the flexible transition section is flexible and sagged.
19. A termination device according to clause 17, wherein the electrical wire in the flexible transition section is flexible and sagged.
20. A termination device according to clause 17, wherein a flexible protector in the flexible transition is added to enclose the fiber pigtail and electrical wires after termination is completed, thereby enhancing both strength and flexibility.
21. A termination device between a hybrid connector consists of at least one fiber optic connector and a conductor, and a hybrid cable consists of at least one fiber pigtail and one electrical wire;
   wherein the termination consists of three sections: a connector section, a termination box section, and a flexible transition section between the connector section and the termination box section;
   wherein the flexible transition section includes at least one fiber pigtail and one electrical wire;
   wherein the fiber pigtail in the flexible transition is connected to the optical fiber connector at one side and is ready to be terminated to the optical fiber of the hybrid cable in the termination box on the other side; and
   wherein the electrical wire in the flexible transition is connected to the conductor of the hybrid connector at one side and is ready to be terminated to the electrical wire of the hybrid cable by a termination fixture in the termination box.
22. A termination device according to clause 21, wherein the fiber pigtail connected to the fiber optic connector is ready to be terminated to the optical fiber of the hybrid cable by fusion splicing.
23. A termination device according to clause 21, wherein the fiber pigtail connected to the fiber optic connector is ready to be terminated to the optical fiber of the hybrid cable by mechanical splicing.
24. A termination device according to clause 21, wherein the optical fiber pigtail in the flexible transition section is longer than the electrical wire.
25. A termination device according to clause 21, wherein the electrical wire in the flexible transition is stranded conductive wire.
26. A termination device according to clause 21, wherein the electrical wire in the flexible transition is flexible busbars.
27. A termination device according to clause 21, wherein the electrical wire in the flexible transition is braided conductive wire.
28. A termination device according to clause 21, wherein a flexible protector in the flexible transition is added to enclose the fiber pigtail and electrical wires after termination is completed, thereby enhancing both strength and flexibility.
29. A termination device between a hybrid connector consists of at least one fiber optic connector and a conductor, and a hybrid cable consists of at least one optical fiber pigtail and one electrical wire;
   wherein the termination consists of three sections: a connector section, a termination box section, and a flexible transition section between the connector section and the termination box section;
   wherein the flexible transition section includes at least one fiber pigtail and one electrical wire;
   wherein the fiber pigtail in the flexible transition is connected to the optical fiber connector at one side and is connected to a stub fiber in the termination box at the other side;
   wherein the stub fiber in the termination box is ready to be terminated to the optical fiber of the hybrid cable;
   wherein the electrical wire in the flexible transition is connected to the conductor of the hybrid connector at one side and is connected to a termination fixture in the termination box on the other side; and
   wherein the termination fixture in the termination box is ready to terminate the electrical wire of the hybrid cable.
30. A termination device according to clause 29, wherein the stub fiber in the termination box is ready to be terminated to the optical fiber of the hybrid cable by fusion splicing.
31. A termination device according to clause 29, wherein the stub fiber in the termination box is ready to be terminated to the optical fiber of the hybrid cable by mechanical splicing.
32. A termination device according to clause 29, wherein the optical fiber pigtail in the flexible transition section is longer than the electrical wire.
33. A termination device according to clause 29, wherein the electrical wire in the flexible transition is stranded conductive wire.
34. A termination device according to clause 29, wherein the electrical wire in the flexible transition is flexible busbars.
35. A termination device according to clause 29, wherein the electrical wire in the flexible transition is braided conductive wire.
36. A termination device according to clause 29, wherein a flexible protector in the flexible transition encloses the fiber pigtail and electrical wires to enhance both strength and flexibility.
37. A termination device between a hybrid connector consists of at least one field terminable fiber optic connector and a conductor, and a hybrid cable consists of at least one optical fiber pigtail and one electrical wire;
   wherein the termination consists of three sections: a connector section, a termination box section, and a flexible transition section between the connector section and the termination box section;
   wherein the field terminable fiber optic connector has a stub fiber that is ready to be terminated to the optical fiber of the hybrid cable;
   wherein the flexible transition section includes at least one electrical wire;
   wherein the electrical wire in the flexible transition is connected to the conductor of the hybrid connector at one side and is connected to a termination fixture in the termination box; and
   wherein the termination fixture in the termination box is ready to be terminated to the electrical wire of the hybrid cable.
38. A termination device according to clause 37, wherein the optical fiber pigtail in the flexible transition section is longer than the electrical wire after the termination is completed.
39. A termination device according to clause 37, wherein the electrical wire in the flexible transition is stranded conductive wire.
40. A termination device according to clause 37, wherein the electrical wire in the flexible transition is flexible busbars.
41. A termination method according to clause 37, wherein the electrical wire in the flexible transition is braided conductive wire.
42. A termination device according to clause 37, wherein a flexible protector in the flexible transition is added to enclose the fiber pigtail and electrical wires after termination is completed, thereby enhancing both strength and flexibility.

## Claims

1. A hybrid connector assembly comprising:
a hybrid connector;
a termination box; and
a flexible transition including an optical fiber and an electrical conductor, wherein a first end of the optical fiber is terminated at the hybrid connector and a first end of the electrical conductor is terminated at the hybrid connector.

2. The hybrid connector assembly of claim 1, wherein the flexible transition is made from a pliable material.

3. The hybrid connector assembly of any preceding claim, wherein a length of the optical fiber is longer than a length of the flexible transition.

4. The hybrid connector assembly of any preceding claim, wherein a second end of the optical fiber is mechanically spliced to an optical fiber from a hybrid cable inside the termination box.

5. The hybrid connector assembly of any preceding claim, wherein a second end of the electrical conductor is electrically coupled to an electrical conductor from a hybrid cable inside the termination box.

6. The hybrid connector assembly of claim 1, wherein a second end of the electrical conductor is electrically coupled to an electrical conductor from a hybrid cable inside the termination box, and a second end of the optical fiber is field terminated to an optical fiber included in the hybrid cable.

7. The hybrid connector assembly of claim 1, further comprising:
a first rigid plate extending from a first wall of the termination box, the first rigid plate including a first opening for engaging a first latch of a hybrid adapter; and
a second rigid plate extending from a second wall of the termination box, the second rigid plate including a second opening for engaging a second latch of the hybrid adapter.

8. The hybrid connector assembly of claim 7, wherein the first rigid plate and the second rigid plate includes a non-zero angle.

9. The hybrid connector assembly of claim 7, further comprising:
a rotating pin;
wherein the first rigid plate comprises a first portion and a second portion rotatably connected at the rotating pin; and
wherein the second rigid plate comprises a first portion and a second portion configured to be rotatably connected at the rotating pin.
